# EUROPEAN PATENT APPLICATION

(11) **EP 3 922 502 A1**
(43) Date of publication of application: **15.12.2021**
(21) Application number: 19922779.4
(22) Date of filing: 25.12.2019
(51) Int. Cl.: B60L 3/00

(54) **RAIL TRANSIT TRAIN AND FAULT PROTECTION METHOD THEREOF**

(30) Priority: 02.04.2019 CN 201910260253
(71) Applicant: CRRC Zhuzhou Locomotive Co., Ltd, Zhuzhou, Hunan 412001 (CN)
(72) Inventor: ZHOU, Li, Zhuzhou, Hunan 412001 (CN); JIANG, Dafa, Zhuzhou, Hunan 412001 (CN); ZHANG, Pan, Zhuzhou, Hunan 412001 (CN); CAO, Zengming, Zhuzhou, Hunan 412001 (CN); TANG, Renjie, Zhuzhou, Hunan 412001 (CN); CHEN, Yong, Zhuzhou, Hunan 412001 (CN); LI, Jun, Zhuzhou, Hunan 412001 (CN); QU, Haiyang, Zhuzhou, Hunan 412001 (CN); SI, Shangzhuo, Zhuzhou, Hunan 412001 (CN); ZHU, Weijian, Zhuzhou, Hunan 412001 (CN)
(74) Representative: Kramer Barske Schmidtchen Patentanwälte PartG mbB
(86) International application number: PCT/CN2019/128242
(87) International publication number: WO 2020/199680

(57) **Abstract**

Disclosed are a rail transit train and a fault protection method thereof. The rail transit train includes two medium voltage power supply buses (A, B), wherein the two medium voltage power supply buses (A, B) are connected through a first contactor (K(III); and when the two medium voltage power supply buses (A, B) both work normally, the power supply capacity and the loads of the two medium voltage power supply buses (A, B) are balanced. The rail transit train can effectively reduce the impact of an interphase short-circuit fault of the medium voltage power bus on an auxiliary power supply system of the entire train, ensure the normal operation of the train in the case of faults, and improve the safety and the operating efficiency of the rail transit train.

## Description

### Field of the Invention

The present invention relates to the technical field of power supply of rail transit trains, in particular to a rail transit train and a fault protection method thereof.

### Background of the Invention

A medium voltage power supply network of a rail transit train supplies power to all medium and low voltage auxiliary equipment of the train, and thus is an important part of an electrical system of the train. Therefore, the medium voltage power supply network is required to have high stability and low fault rate. The power supply of the medium voltage power supply network of the rail transit train is usually an auxiliary converter, which outputs three-phase 380V alternating current; the loads include air conditioning systems, air compressors, illuminating systems, chargers, and so on; and other auxiliary equipment includes relays, contactors, air switches, etc.

The development of the medium voltage power supply network of the rail transit train has gone through the stages of extended power supply, cross power supply and grid-connected power supply. A train containing 6 marshaled subway vehicles is taken as an example to introduce these power supply modes. In the extended power supply mode, the entire train is usually divided into two power supply intervals, each contains three subway vehicles, and each power supply interval is provided with an auxiliary converter to supply power to the power supply interval; and when an auxiliary converter is faulty, the faulty auxiliary converter is shut down, another auxiliary converter supplies power to the entire train, and a part of loads is shut down at the same time. In the cross power supply mode, two auxiliary converters are usually provided; the medium and low voltage loads of the entire train are equally divided into two groups, each auxiliary converter supplies power to a group of loads, when one auxiliary converter is faulty, the faulty auxiliary converter and the group of loads powered by it are shut down, and the loads powered by the other auxiliary converter run normally. In the grid-connected power supply mode, 6 auxiliary converters and a medium voltage bus running through the entire train can be provided, all auxiliary converters supply power to the medium voltage bus in parallel, all medium and low voltage loads obtain electric energy from the medium voltage bus; and when one auxiliary converter is faulty, the faulty converter is shut down, and the remaining 5 converters supply power to the medium voltage bus.

According to the above-mentioned medium voltage power supply network of the rail transit train, the fault protection performance of the grid-connected power supply is significantly better than that of the extended power supply and the cross power supply. When one auxiliary converter is faulty, the extended power supply and the cross power supply will lose 50% of the medium voltage power supply capacity, while the grid-connected power supply will only lose 16.7% of the medium voltage power supply capacity (6 auxiliary converters are taken as an example). By setting reasonable redundant power supply capacity for each auxiliary converter, it can be ensured that even if one auxiliary converter is faulty, the medium voltage power supply network in the grid-connected power supply mode can still guarantee the normal operation of the medium and low voltage loads of the entire train. Therefore, the grid-connected power supply has now become the first choice for the auxiliary power supply systems of urban rail transit trains. However, its fault protection performance is still not perfect. The grid-connected power supply is provided with a three-phase 380V medium voltage power supply bus that runs through the entire train, so that the medium voltage power supply network of the entire train cannot work normally in the case of an interphase short-circuit fault.

### Summary of the Invention

The technical problem to be solved by the present invention is to provide a rail transit train and a fault protection method thereof in view of the shortcomings of the prior art, which can effectively reduce the impact of an interphase short-circuit fault of a medium voltage power bus on an auxiliary power supply system of the entire train, ensure the normal operation of the train in the case of faults, and improve the safety and the operating efficiency of the rail transit train.

In order to solve the above-mentioned technical problem, the technical solution adopted by the present invention is: a rail transit train includes two medium voltage power supply buses; the two medium voltage power supply buses are connected through a first contactor; and when the two medium voltage power supply buses both work normally, the power supply capacity and the loads of the two medium voltage power supply buses are balanced.

The rail transit train of the present invention is provided with two medium voltage power supply buses, and the power supply and the loads are configured on the two medium voltage power supply buses in a balanced manner, the two medium voltage power supply buses are redundant backups for each other, when the two medium voltage power supply buses both work normally, the power supply capacity and the load power of the two medium voltage power supply buses can be balanced through the contactor, in this way, it is ensured that the medium voltage power supply network can partially work normally in the case of the interphase short-circuit fault of one medium voltage power bus, thereby effectively reducing the impact of the interphase short-circuit fault of the medium voltage power bus on the auxiliary power supply system of the entire train.

Preferably, the two medium voltage power supply buses both run through the entire train; the entire train includes a plurality of power supply sections, and each power supply section covers a plurality of carriages; and any two adjacent sections of a medium voltage power supply bus are connected through a second contactor. When the medium voltage power supply network is faulty, the corresponding second contactor is disconnected to isolate the faulty unit from the medium voltage power supply network, so that the entire train can continue to run in a degradation mode, and even continue to run normally without performance degradation, which further ensures the safety and the operating efficiency of the rail transit train.

Further, in the present invention, the two medium voltage power supply buses in a middle power supply section are connected through a first contactor, the middle power supply section corresponds to the middle of the train, and the first contactor is arranged in the middle power supply section, so that the entire power supply network is eudipleural to further ensure the balance of the power supply capacity and the load balance of the medium voltage power supply buses.

In the present invention, the specific implementation process of ensuring the balance of power supply capacity is: m medium voltage power supplies are arranged in each power supply section, and each medium voltage power supply bus in each power supply section is respectively connected with m/2 medium voltage power supplies, wherein m is an even number greater than 0, and m≤n, while n represents the number of carriages within the power supply section.

In order to simplify the power supply structure, m is set to 2 in the present invention.

In the present invention, the medium voltage power supply is connected with the corresponding medium voltage power supply bus through a third contactor, and when a certain medium voltage power supply is faulty, the corresponding third contactor is disconnected to ensure that the remaining medium voltage power supplies normally supply power to the corresponding medium voltage power supply bus.

In the present invention, the load balance is ensured by the following setting rules: each carriage is provided with two sets of load units, each set of load units includes multiple pairs of loads, and two loads in each pair of loads have the same function or have corresponding functions; and the two sets of load units are respectively connected with the two medium voltage power supply buses.

The functional correspondence in the present invention refers to similar functions, for example, the function of a cab air conditioner corresponds to that of a cab foot heater (both are used for heating), and the function of a traction box fan corresponds to that of a braking resistor fan (both are used for device heat dissipation).

Further, in order to ensure that when the corresponding load is faulty, it is convenient to cut off the faulty load, the load of the present invention is connected with the corresponding medium voltage power supply bus through a fourth contactor.

Further, in order to simplify the process of setting up the power supply network, it is set in the present invention that the number of power supply sections is the same as the number of vehicle power units.

As an inventive concept, the present invention further provides a method for judging an interphase short-circuit section of the medium voltage power supply bus and a fault of contactor in the above-mentioned rail transit train.

The method for judging the interphase short-circuit of the medium voltage power supply bus:

Each medium voltage power supply is continuously detected the output end current, if over current at output end of any medium voltage power supply is detected twice within a time T (1min), ajudgement of interphase short-circuit of the medium voltage power supply bus is made, and a vehicle control unit shuts down all medium voltage power supplies;
when all medium voltage power supply sources are shut down, the vehicle control unit disconnects all medium voltage bus contactors, which including the first contactor and the second contactor, and divides the medium voltage power supply bus into 6 independent sections;
when all medium voltage bus contactors are disconnected, the vehicle control unit starts all medium voltage power supplies to supply power to the loads connected with the corresponding medium voltage power supply bus sections, and conducts a short circuit test on the medium voltage power supply bus sections: (1) if no short-circuit fault of medium voltage power supply in corresponding medium voltage power supply bus section is detected during the test, the vehicle control unit shuts down all medium voltage power supplies, and closes all medium voltage bus contactors (that is, the first contactor and all second contactors), and then the vehicle control unit starts all medium voltage power supplies , and the medium voltage power supply system restores the normal operation; and (2) if any one or more short-circuit fault of medium voltage power supplies are detected in the corresponding medium voltage power supply bus sections during the test process (the medium voltage power supply is responsible for detecting a short-circuit fault feedback signal, and the control unit is responsible for issuing a detection instruction), then the vehicle control unit shuts down all medium voltage power supplies closes the medium voltage bus contactors (the second contactors) of the medium voltage power supply bus sections which have no short-circuit fault, and starts the medium voltage power supplies of the normally working medium voltage bus sections, and the medium voltage power supply system restores the operation after the faulty medium voltage power supply bus section is removed.

The method for judging the fault of the medium voltage bus contactor:

The vehicle control unit judges the fault of the medium voltage bus contactor by comparing a control command of the medium voltage bus contactor with a state detection signal of contactor, if the control command is inconsistent with the state detection signal, the medium voltage bus contactor is faulty.

If the control command of the medium voltage bus contactor is closure, and the state detection signal of contactor is non-closure, then a contact point non-closure fault of the medium voltage bus contactor is occurred; and
if the control command of the medium voltage bus contactor is disconnection, and the state detection signal of contactor is closure, then a contact point adhesion fault of the medium voltage bus contactor is occurred.

The internal faults of the medium voltage power supplies are judged by its own control system, and the internal faults of the medium voltage power loads are judged by its own control system.

As an inventive concept, the present invention further provides a fault protection method of the above-mentioned rail transit vehicle, including:
when an interphase short-circuit fault occurs in a certain medium voltage power supply bus in a certain power supply section, the contactor connecting the faulty medium voltage power supply bus of the power supply section with the medium voltage power supply bus of the adjacent power supply section is disconnected, and the faulty medium voltage power supply bus of the power supply section is isolated from the medium voltage power supplies and loads connected thereto, and the remaining medium voltage power supplies in parallel connection supply power to the corresponding medium voltage power supply bus.

Through the above-mentioned method, the impact of the interphase short-circuit fault of the medium voltage power bus on the auxiliary power supply system of the entire train can be effectively reduced.

Further, the method of the present invention further includes: when the medium voltage power supply of a certain carriage is faulty, the contactor connecting the medium voltage power supply with the corresponding medium voltage power supply bus is disconnected, and the remaining medium voltage power supplies in parallel connection supply power to the corresponding medium voltage power supply bus; and when the load is faulty, the faulty load is shut down. The normal operation of the train in the case of faults is further ensured, the safety and the operating efficiency of the rail transit train are improved.

Compared with the prior art, the present invention has the following beneficial effects: 1. The present invention can effectively reduce the impact of the interphase short-circuit fault of the medium voltage power bus on the auxiliary power supply system of the entire train, ensure the normal operation of the train in the case of faults, and improve the safety and the operating efficiency of the rail transit train; 2. the present invention ensures the balance and redundancy of the power supply capacity and the loads of the medium voltage power supply network in the case of faults, and ensures that the power supply capacity of the medium voltage power supply network does not drop significantly or even does not drop at all in the case of faults; and the loads of each carriage is not completely lost, and the integrity of the functions of the loads of each carriage is maximally guaranteed.

### Brief Description of the Drawings

Fig. 1 is a schematic diagram of the structure of the present invention;
Fig. 2 is a schematic diagram of an embodiment of the present invention on a train containing 8 marshalled subway vehicles;
Fig. 3 is a schematic diagram of a connection relationship among an auxiliary converter, a medium and low voltage load and a medium voltage power supply bus in a power supply section 1 of the present invention;
Fig. 4 is a schematic diagram of fault protection measures of a medium voltage power supply network provided by the present invention when the auxiliary converter is faulty;
Fig. 5 is a schematic diagram of the fault protection measures of the medium voltage power supply network provided by the present invention in the case of an interphase short-circuit fault of the medium voltage power supply bus in the power supply section 1; and
Fig. 6 is a schematic diagram of the fault protection measures of the medium voltage power supply network provided by the present invention in the case of the interphase short-circuit fault of the medium voltage power supply bus in a power supply section 2.

### Detailed Description of Embodiments

The present invention guarantees the normal operation of the train under fault conditions through bus redundancy, source and load balance, section division and fault isolation, specifically:

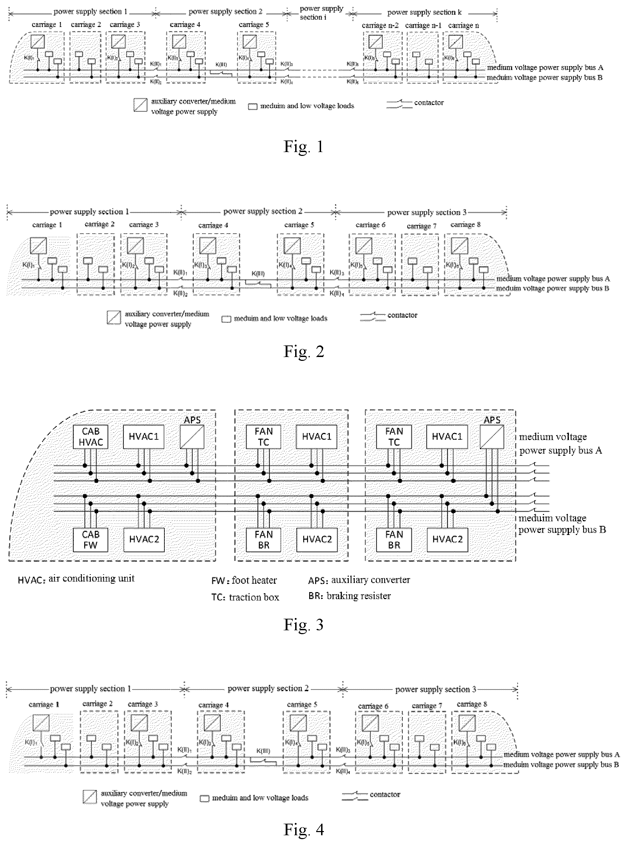

"Bus redundancy" means that the entire train is provided with two medium voltage power supply buses, and the two buses are redundant backups for each other; and when an interphase short-circuit fault occurs in one medium voltage power supply bus, the other medium voltage power supply bus can work normally. Fig. 1 shows a medium voltage power supply bus A and a medium voltage power supply bus B. The two medium voltage power supply buses are connected through a contactor, as shown by K (III) (a first contactor) in Fig. 1. When the two medium voltage power supply buses both work normally, the power supply capacity and the load power of the two medium voltage power supply buses can be balanced by the contactor K (III).

"Source and load balance" means that medium voltage power supplies-auxiliary converters and loads (medium and low voltage loads) of the medium voltage power supply network of the rail transit train are evenly distributed onto the two medium voltage power supply buses; when the interphase short-circuit fault occurs in one medium voltage power supply bus, the auxiliary converters and the loads connected to the other medium voltage power supply bus can work normally. As shown in Fig. 1, in carriages 1-5, two auxiliary converters (the carriage1 and the carriage 4) are connected to the medium voltage power supply bus A, and the other two auxiliary converters (the carriage 3 and the carriage 5) are connected to the medium voltage power supply bus B; and the medium and low voltage loads in each carriage are connected to the two medium voltage power supply buses in a balanced manner. The functions and the power of the loads should be considered during load balance, that is, the loads (such as two air conditioning units) of the same function of the same carriage are respectively connected to the two medium voltage power supply buses, and the balance of the total loads of the two medium voltage power supply buses is maintained; and when the interphase short-circuit fault occurs in one medium voltage power supply bus , the loads connected to the other medium voltage power supply bus can ensure the integrity of the vehicle functions.

"Interval division" means that the entire train is divided into several power supply sections. As shown in Fig. 1, the entire train is divided into a power supply section 1, a power supply section 2, ... and a power supply section k. The actual number of power supply sections divided by the rail transit train is determined according to the marshalling form of carriages and is generally consistent with the that of the basic power units of the vehicles. Corresponding to the power supply sections, the medium voltage power supply buses A and B are also divided into several sections by contactors K(II)₁, K(II)₂, K(II)₃ (namely the second contactors).

"Fault isolation" , that is, when the medium voltage power supply network is faulty, the faulty unit is isolated from the medium voltage power supply network by cutting off the corresponding contactor to prevent the scope of the fault from expanding. Balance the power supply capacity and the load power between the power supply sections and different carriages in the same power supply section to ensure the normal operation of each carriage in the case of complete function, performance degradation, or even non performance degradation.

It can be seen that by reasonably setting the power supply capacity redundancy, that is, the output power redundancy of the auxiliary converters, the total output power of the remaining auxiliary converters can (to a certain extent) meet the needs of the medium and low voltage loads of the entire train when one or more auxiliary converters are isolated. By reasonably setting the redundancy of the medium and low voltage loads, it is ensured that when a part of medium and low voltage loads in a power supply section is isolated, the total output power of the remaining medium and low voltage loads in the power supply section can (to a certain extent) compensate the loss of the medium and low voltage loads in the power supply section.

Determine whether the medium voltage power supply network is faulty by detecting the state parameters at the output terminals of the auxiliary converters, the medium voltage power supply buses, the contactors and the like. When a fault occurs, a fault protection control instruction is generated to control the closure and disconnection of the corresponding contactor, so as to isolate the faulty unit from the medium voltage power supply network.

As shown in Fig. 1, in an embodiment 1 of the present invention, the entire train is composed of a carriage1, a carriage 2, ... and a carriage n. The entire train is divided into several power supply sections, such as a power supply section 1, a power supply section 2, ... and a power supply section k. The actual division of the power supply sections of the rail transit train is divided according to the marshalling form of carriages, which is usually consistent with the that of the basic power units of the vehicles. 2-4 carriages form a power supply section. As shown in Fig. 1, the carriages 1-3 form the power supply section 1, and the carriages 4 and 5 form the power supply section 2. The entire train includes two medium voltage power supply buses, namely the medium voltage power supply bus A and the medium voltage power supply bus B. The two medium voltage power supply buses are both three-phase 380V power supply buses, which run through the entire train. The two medium voltage power supply buses form a set of redundant backup system for fault protection.

Several medium voltage power supplies, namely auxiliary converters, are provided. The auxiliary converters are distributed on the entire train. Usually, at least two auxiliary converters are arranged in one power supply section, and are respectively connected to the medium voltage power supply bus A and the medium voltage power supply bus B. As shown in Fig. 1, the power supply section 1 contains two auxiliary converters, one is located on the carriage 1 and is connected to the medium voltage power supply bus A, and the other is located on the carriage 3 and is connected to the medium voltage power supply bus B; and the power supply section 2 also contains two auxiliary converters, one is located on the carriage 4 and is connected to the medium voltage power supply bus A, and the other is located on the carriage 5. All auxiliary converters of the entire train provide power to all medium and low voltage loads in parallel through the medium voltage power supply buses, when one or more auxiliary converters are faulty, the remaining auxiliary converters are put into power supply capacity redundancy to supply power to the medium and low voltage loads, so as to ensure the normal operation of the auxiliary power supply system of the entire train, or continue to run in the case of performance degradation.

The medium and low voltage loads usually include air conditioning units, air compressors, illuminating systems, chargers, and so on. The same type of loads (such as two air conditioning units, two illuminating systems and two electric radiators and the like) of the same carriage are respectively connected to the two medium voltage power supply buses, and the total load balance of the two medium voltage power supply buses is maintained. When one medium voltage power supply bus is faulty (for example, the interphase short-circuit occurs in the medium voltage power supply bus), which causes the medium and low voltage loads connected to the medium voltage power supply bus to not work normally, the medium and low voltage loads connected to the other medium voltage power supply bus can still work normally to ensure that the basic functions of the medium and low voltage loads of the carriage, such as passenger compartment heating, cooling, ventilation and lighting, etc., are not lost.

The contactors includes contactors (the third contactors) connecting the auxiliary converters with the medium voltage power supply buses, as shown by K(I)₁, K(I)₂, K(I)₃... in Fig. 1; contactors (the second contactors) connecting different sections of the medium voltage power supply buses, as shown by K(II)₁, K(II)₂, K(II)₃...... in Fig. 1; and a contactor (the first contactor) connecting the medium voltage power supply bus A with the medium voltage power supply bus B, as shown by K(III) in Fig. 1. The contactors connect the medium voltage power supplies -auxiliary converters, the medium voltage power supply buses and the medium and low voltage loads to form the medium voltage power supply network, and the power supply capacity and the load power of the medium voltage power supply network are balanced during the normal operation of the rail transit train; when the medium voltage power supply network is faulty, the faulty unit is isolated from the medium voltage power supply network by disconnecting the corresponding contactor to prevent the fault range from expanding, and the power supply capacity and the load power are balanced between the remaining auxiliary converters and the medium and low voltage loads. The control instruction of the contactor comes from a corresponding fault detection and control system of the medium voltage power supply network, and whether the medium voltage power supply network is faulty is determined by detecting the state parameters at the output terminals of the auxiliary converters, the medium voltage power supply buses and the contactors. When a fault occurs, a fault protection control instruction is generated to control the corresponding contactor to disconnect, so as to isolate the faulty unit from the medium voltage power supply network.

Fig. 2 shows a train containing 8 marshaled subway carriages. The entire train is divided into three power supply sections: the sections 1-3 form the power supply section 1, the sections 4 and 5 form the power supply section 2, and the sections 6-8 form the power supply section 3. The train is provided with two three-phase 380V medium voltage power supply buses running through the entire train, which are respectively the medium voltage power supply bus A and the medium voltage power supply bus B shown in Fig. 2. The two medium voltage power supply buses are electrically connected through a three-phase contactor K (III). Corresponding to the power supply sections, the medium voltage power supply buses of the entire train are divided into three power supply sections, which are located on the carriages 1-3, the carriages 4 and 5, and the carriages 6-8, respectively. The adjacent power supply sections of the medium voltage power supply buses are connected through the three-phase contactors, shown by K(II)₁, K(II)₂, K(II)₃ and K(II)₄ in Fig. 2. The entire train is provided with 6 auxiliary converters, which are respectively located on the carriage 1, the carriage 3, the carriage 4, the carriage 5, the carriage 6 and the carriage 8, that is, two auxiliary converters are arranged in each power supply section. The auxiliary converters are connected to the medium voltage power supply buses through three-phase contactors, shown by K(I)₁, K(I)₂, K(I)₃,K(I)₄,K(I)₅ and K(I)₆ in Fig. 2.

The power supply section is used as a basic unit to carry out the connection design of the auxiliary converter and the medium and low voltage load with the medium voltage power supply bus. Fig. 3 shows the connection mode of the power supply section 1, that is, the connection mode of the auxiliary converters and the medium and low voltage loads in the carriages 1-3 with the medium voltage power supply buses. The two auxiliary converters in the power supply section are respectively connected to the medium voltage power supply bus A and the medium voltage power supply bus B (to save space, the connection aid is not shown in Fig. 3). The connection between the medium and low voltage load and the medium voltage power supply bus follows the following rules: the first, connect the loads of the same function of the same carriage, as shown in Fig. 3, the air conditioning units of the carriages 1-3, to the medium voltage power supply bus A and the medium voltage power supply bus B respectively; and the second is to evenly distribute the medium and low voltage loads of the same vehicle to the two medium voltage power supply buses, as shown in Fig. 3, the cab air conditioning and the cab foot heating of the carriage 1 (the lead carriage with driver's cab), the traction box fans and braking resistor fans of the carriage 2 and the carriage 3 are connected to the medium voltage power supply bus A and the medium voltage power supply bus B respectively.

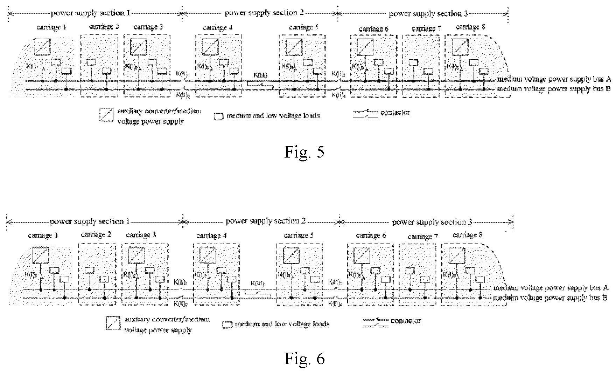

For the following several types of faults, the fault protection measures adopted by the present invention are:
(1) Auxiliary converter fault is shown in Fig. 4. Take the fault of the auxiliary converter of the vehicle 1 as an example. At this time, the three-phase contactor connecting the auxiliary converter with the medium voltage power supply bus is disconnected, the faulty auxiliary converter is isolated from the medium voltage power supply network, the remaining 5 auxiliary converters in parallel connection supply power to the medium voltage power supply bus. The redundancy of the power supply capacity of the auxiliary converter can partially or even completely compensate for the loss of the power supply capacity of the medium voltage power supply network caused by the faulty auxiliary converter, so that the performance and functions of the auxiliary power supply system of the entire train are not or less affected.
(2) Interphase short-circuit fault of the medium voltage power supply bus is shown in Fig. 5. Take the interphase short-circuit fault of the medium voltage power supply bus A of the power supply section 1 as an example. At this time, the three-phase contactor K (II) for connecting the faulty section of the medium voltage power supply bus A with the adjacent section is disconnected, the medium voltage power supply bus of the faulty section and the auxiliary inverter connected thereto are isolated from the medium and low voltage loads, and the remaining 5 auxiliary converters in parallel connection supply power to the remaining medium and low voltage loads through the medium voltage power supply bus. The functions and performance of the medium and low voltage loads of the carriages in the power supply section 2 and the power supply section 3, that is, the carriages 4-8, are basically unaffected; and the carriages in the power supply section 1, that is, the carriages 1-3 lose about half of the medium and low voltage loads, the functions and performance are affected to a certain extent, but the entire train can continue to run.

When the interphase short-circuit fault of the medium voltage power supply bus occurs in the power supply section, as shown in Fig. 6, at this time, the three-phase contactors K(II)₁ and K(II)₃ connecting the faulty section of the medium voltage power supply bus A with the adjacent section are disconnected, the three-phase contactor K(III) connecting the medium voltage power supply bus A with the medium voltage power supply bus B is disconnected, the medium voltage power supply bus of the faulty section and the auxiliary inverter connected thereto are isolated from the medium and low voltage loads, and the remaining 5 auxiliary converters in parallel connection supply power to the remaining medium and low voltage loads through the medium voltage power supply bus. Specifically, three auxiliary converters connected to the medium voltage power supply bus B supply power to the medium and low voltage loads connected to the medium voltage power supply bus B, and the three auxiliary converters are in parallel connection; and the auxiliary converters and the medium and low voltage loads connected to the medium voltage power supply bus A of the power supply section 1, and the auxiliary converters and the medium and low voltage loads connected to the medium voltage power supply bus A of the power supply section 3 respectively constitute two independent power supply units. The functions and performance of the medium and low voltage loads of the carriages in the power supply section 1 and the power supply section 3, that is, the carriages 1-3 and the carriages 6-8, are basically unaffected; and the carriages in the power supply section 2, that is, the carriages 4 and 5 lose about half of the medium and low voltage loads, the functions and performance are affected to a certain extent, but the entire train can continue to run. (3) When the fault occurs in medium and low voltage load, a train control and management system shuts down the corresponding faulty load equipment (that is, disconnects the corresponding fourth contactor), and other equipment and components of the medium voltage power supply network are not affected.

The faults of other equipment, components or locations, as well as the combinations of faults, can be regarded as the combinations of the above types of faults. The fault protection measures and the influence on the functions and performance of the auxiliary power supply system of the entire train can be obtained by analysis according to the above method.

## Claims

1. A rail transit train, comprising two medium voltage power supply buses, wherein the two medium voltage power supply buses are connected through a first contactor; and when the two medium voltage power supply buses both work normally, the power supply capacity and the loads of the two medium voltage power supply buses are balanced.

2. The rail transit train according to claim 1, wherein the two medium voltage power supply buses both run through the entire train; the entire train comprises a plurality of power supply sections, and each power supply section covers a plurality of carriages; and any two adjacent sections of a medium voltage power supply bus are connected through a second contactor.

3. The rail transit train according to claim 2, wherein the two medium voltage power supply buses in the middle power supply section are connected through a first contactor.

4. The rail transit train according to claim 2 or 3, wherein m medium voltage power supplies are arranged in each power supply section, and each medium voltage power supply bus in each power supply section is respectively connected with m/2 medium voltage power supplies, wherein m is an even number greater than 0, and m≤n, while n represents the number of carriages within the power supply section.

5. The rail transit train according to claim 4, wherein the medium voltage power supply is connected with the corresponding medium voltage power supply bus through a third contactor.

6. The rail transit train according to any of claims 2-5, wherein each carriage comprises two sets of load units, each set of load units comprises multiple pairs of loads, and two loads in each pair of loads have the same function or have corresponding functions; and the two sets of load units are respectively connected with the two medium voltage power supply buses.

7. The rail transit train according to claim 6, wherein the said load is connected with the corresponding medium voltage power supply bus through a fourth contactor.

8. The rail transit train according to any of claims 2-7, wherein the number of power supply sections is the same as the number of vehicle power units.

9. A fault protection method of the rail transit train according to any of claims 1-8, comprising:
when an interphase short-circuit fault occurs in a certain medium voltage power supply bus in a certain power supply section, the contactor connecting the faulty medium voltage power supply bus of the power supply section with the medium voltage power supply bus of the adjacent power supply section is disconnected, and the faulty medium voltage power supply bus of the power supply section is isolated from the medium voltage power supplies and loads connected thereto, and the remaining medium voltage power supplies in parallel connection supply power to the corresponding medium voltage power supply bus.

10. The method according to claim 9, wherein the specific implementation process of the method comprises: if over current at output end of any medium voltage power supply is detected twice within a time T, ajudgement of interphase short-circuit of the medium voltage power supply bus is made, and a vehicle control unit shuts down all medium voltage power supplies; when all medium voltage power supplies are shut down, the vehicle control unit disconnects the first contactor and all second contactors, then restarts all medium voltage power supplies to supply power to the loads connected with the corresponding medium voltage power supply bus sections, and conducts a short-circuit test on the medium voltage power supply bus sections: if no short-circuit fault of medium voltage power supply in corresponding medium voltage power supply bus section is detected during the test, the vehicle control unit shuts down all medium voltage power supply sources, and closes the first contactor and all second contactors, and then the vehicle control unit starts all medium voltage power supplies; and if any one or more short-circuit fault of medium voltage power supplies are detected in the corresponding medium voltage power supply bus sections during the test process, then the vehicle control unit shuts down all medium voltage power supplies, closes the second contactors of the medium voltage power supply bus sections which have no short-circuit fault, and starts the medium voltage power supplies of the normally working medium voltage bus sections.

11. The method according to claim 9, further comprising:
when the medium voltage power supply of a carriage is faulty, the contactor connecting the medium voltage power supply with the corresponding medium voltage power supply bus is disconnected, and the remaining medium voltage power supplies in parallel connection supply power to the corresponding medium voltage power supply bus;
when a load is faulty, the faulty load is shut down; and
when a contactor is faulty, the faulty contactor is disconnected.

12. The method according to claim 11, wherein the specific judging process of fault of the contactor comprises:
if a control command of the contactor is inconsistent with a state detection signal of contactor, the contactor is faulty.

13. The method according to claim 12, wherein if the control command of contactor is closure, and the state detection signal of contactor is non-closure, then a contact point non-closure fault of the contactor is occurred; and if the control command of the contactor is disconnection, and the state detection signal of contactor is closure, then a contact point adhesion fault of the contactor is occurred.
